# EUROPEAN PATENT APPLICATION

(11) **EP 2 779 739 A1**
(43) Date of publication of application: **17.09.2014**
(21) Application number: 12847436.8
(22) Date of filing: 06.11.2012
(51) Int. Cl.: H04W 28/16, H04W 16/32, H04W 92/20

(54) **MOBILE COMMUNICATION METHOD**

(30) Priority: 07.11.2011 JP 2011243997
(71) Applicant: NTT DOCOMO, INC., Chiyoda-ku Tokyo 100-6150 (JP)
(72) Inventor: HAPSARI, Wuri Andarmawanti, Tokyo 100-6150 (JP); TAKAHASHI, Hideaki, Tokyo 100-6150 (JP); NAGATA, Satoshi, Tokyo 100-6150 (JP)
(74) Representative: HOFFMANN EITLE
(86) International application number: PCT/JP2012/078702
(87) International publication number: WO 2013/069627

(57) **Abstract**

It is appropriately determined whether it is necessary for a radio base station to start a CoMP transmission/reception process based on the result of a quality measurement process during a CoMP transmission/reception process in a heterogeneous network environment. A mobile communication method according to the present invention includes a step in which, during "X2 Setup Procedure" between a radio base station (eNB #1) and a radio base station (eNB #2), the radio base station (eNB #1) transmits to the radio base station (eNB #2) an "X2 Setup Request" for giving notification of the PCI of neighbouring cells of the radio base station (eNB #1) and the CSI-RS used for a quality measurement process during the CoMP transmission/reception process in association with one another.

## Description

### Technical Field

The present invention relates to a mobile communication method.

### Background Art

In the Long Term Evolution (LTE) scheme, research has been conducted to apply a Coordinated Multi-Point (CoMP) transmission/reception process so as to improve throughput in a mobile station (UE) located in a cell edge.

Such a CoMP transmission/reception process is a process that cooperatively controls transmission/reception, scaling, and beamforming of a shared data channel signal between a plurality of transmission/reception nodes (transmission point for CoMP) which are geographically separated from each other, for example, a radio base station eNB, a Remote Radio Equipment (RRE), and a relay node RN.

### Citation List

### Non-Patent Literature

Non-Patent Literature 1: 3GPP TR36.819

### Summary of Invention

However, in a heterogeneous network environment where a macro cell, a pico cell, or the like are mixed, a case where the macro cell and the pico cell use the same Physical Cell Identity (PCI) is assumed.

Herein, a Cell specific Reference Signal (CRS) is configured to be set based on the PCI. Accordingly, when neighbouring cells use the same PCI in such a heterogeneous network environment, a problem may occur during a quality measurement process using the CRS.

That is, in this case, when a mobile station UE is subjected to the quality measurement process in a CoMP transmission/reception process using the CRS, there is a problem in that it cannot be determined whether a radio base station eNB managing a serving cell of the mobile station UE should start the CoMP transmission/reception process based on the result of the quality measurement process.

Accordingly, the present invention has been made in view of the above problems of the prior art and is directed to provide a mobile communication method capable of appropriately determining whether it is necessary for a radio base station to start a CoMP transmission/reception process based on the result of a quality measurement process during the CoMP transmission/reception process in a heterogeneous network environment.

According to a first feature of the present invention, a mobile communication method includes transmitting, by a first transmission/reception node, a connection setup request signal to notify a second transmission/reception node of a physical cell identity of neighbouring cells of the first transmission/reception node and a channel state information-reference signal for a quality measurement process during a coordinated multi-point transmission/reception process in association with each other in a procedure of setting a connection between the first transmission/reception node and the second transmission/reception node.

According to a second feature of the present invention, a mobile communication method includes transmitting, by a second transmission/reception node, a connection setup response signal to notify a first transmission/reception node of a physical cell identity of neighbouring cells of the second transmission/reception node and a channel state information-reference signal for a quality measurement process during a coordinated multi-point transmission/reception process in association with each other in a procedure of setting a connection between the first transmission/reception node and the second transmission/reception node.

According to a third feature of the present invention, a mobile communication method includes transmitting, by a first transmission/reception node, a configuration information change signal to notify a second transmission/reception node of a physical cell identity of neighbouring cells of the first transmission/reception node and a channel state information-reference signal for a quality measurement process during a coordinated multi-point transmission/reception process in association with each other in a procedure of changing configuration information between the first transmission/reception node and the second transmission/reception node.

According to a fourth feature of the present invention, a mobile communication method includes: transmitting, by a second transmission/reception node, a coordinated multi-point transmission/reception process setup information request signal to a first transmission/reception node when it is determined that the first transmission/reception node is installed within a target area of the coordinated multi-point transmission/reception process after a procedure of setting a connection between the first transmission/reception node and the second transmission/reception node is completed; and notifying, by the first transmission/reception node, the second transmission/reception node of a physical cell identify of neighbouring cells of the first transmission/reception node and a channel state information-reference signal for a quality measurement process during the coordinated multi-point transmission/reception process in association with each other in response to the coordinated multi-point transmission/reception process setup information request signal.

According to a fifth feature of the present invention, a mobile communication method includes notifying, by an operation and maintenance equipment managing a target area of a coordinated multi-point transmission/reception process, a transmission/reception node of the target area of a physical cell identify of cells under the transmission/reception node and a channel state information-reference signal for a quality measurement process during the coordinated multi-point transmission/reception process in association with each other.

### Brief Description of Drawings

FIG. 1 is an overall configuration diagram of a mobile communication system according to a first embodiment of the present invention.
FIG. 2 is a functional block diagram of a transmission/reception node according to the first embodiment of the present invention.
FIG. 3 is a sequence diagram describing an operation of the mobile communication system according to the first embodiment of the present invention.
FIG. 4 is a diagram illustrating an example of a format of "X2 Setup Request" used in the mobile communication system according to the first embodiment of the present invention.
FIG 5 is a diagram illustrating an example of a format of "X2 Setup Response" used in the mobile communication system according to the first embodiment of the present invention.
FIG. 6 is a diagram illustrating an example of a format of "eNB Configuration Update" used in the mobile communication system according to the first embodiment of the present invention.
FIG. 7 is a sequence diagram illustrating an operation of the mobile communication system according to the first embodiment of the present invention.
FIG. 8 is an overall configuration diagram of a mobile communication system according to a first modification of the present invention.
FIG. 9 is a functional block diagram of an operation and maintenance equipment according to the first modification of the present invention.
FIG. 10 is a diagram illustrating an example of an NRT used in the mobile communication system according to the first modification of the present invention.

### Description of Embodiments

### (Mobile communication system according to first embodiment of the present invention)

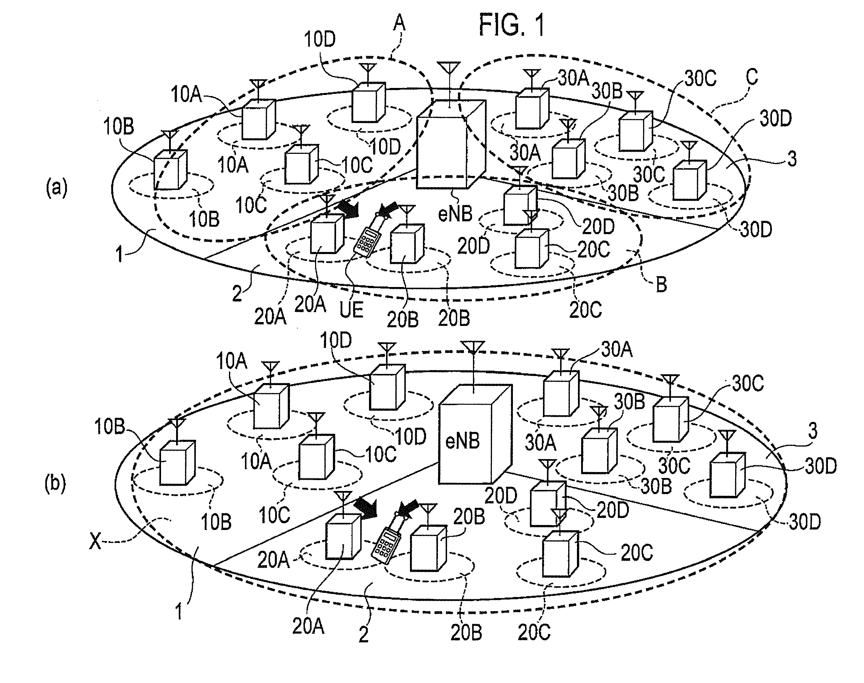

A mobile communication system according to a first embodiment of the present invention will be described with reference to FIGS. 1 to 7. In the present embodiment, an LTE mobile communication system will be described as an example of the mobile communication system according to the present embodiment, but the present invention is also applicable to mobile communication systems other than the LTE mobile communication system.

The mobile communication system according to the present embodiment is configured to be able to perform a CoMP transmission/reception process using a plurality of transmission/reception nodes (CoMP transmission points).

In addition, an area where the CoMP transmission/reception process can be provided, that is, a target area of the CoMP transmission/reception process is referred to as "Coordination Area".

The CoMP transmission/reception process includes "Joint Transmission (JT)", "Dynamic Cell Selection (DCS)", and "Coordinated Scheduling/Beamforming (CS/CB)".

Herein, the "JT" is a process of transmitting a shared data channel signal from a plurality of cells, that is, cells other than a serving cell, to a mobile station UE.

Further, the "DCS" is a process of selecting one cell based on a Channel Quality Indicator (CQI) and transmitting a shared data channel signal from the selected cell to the mobile station UE at a high speed.

Furthermore, the "CS/CB" is a process of performing coordinated scheduling and beamforming between the serving cell and the neighbouring cells.

In the examples of FIGS. 1(a) and 1(b), cells (for example, pico cells, femto cells, and Closed Subscriber Group (CSG) cells) 10A to 10D managed by a plurality of transmission/reception nodes 10A to 10D are set in a cell (for example, macro cell) 1 managed by a radio base station eNB (transmission/reception node), cells (for example, pico cells, femto cells, and CSG cells) 20A to 20D managed by a plurality of transmission/reception nodes 20A to 20D are set in a cell (for example, macro cell) 2 managed by a radio base station eNB, and cells (for example, pico cells, femto cells, or CSG cells) 30A to 30D managed by a plurality of transmission/reception nodes 30A to 30D are set in a cell (for example, macro cell) 3 managed by a radio base station eNB.

Herein, in a case where the CoMP transmission/reception process is provided in cells within the same "Coordination Area", the cells may be configured to use the same PCI or may be configured to use different PCIs.

In addition, as illustrated in FIG. 1(a), the mobile communication system according to the present embodiment may be configured such that a "Coordination Area #A" is formed by the cells 10A to 10D, a "Coordination Area #B" is formed by the cells 20A to 20D, and a "Coordination Area # C" is formed by the cells 30A to 30D.

Alternatively, as illustrated in FIG. 1(b), the mobile communication system according to the present embodiment may be configured such that a single "Coordination Area #X" is formed by the cells 10A to 10D, the cells 20A to 20D, and the cells 30A to 30D.

Furthermore, each of the cells are configured to transmit a Channel State Information-Reference Signal (CSI-RS) in addition to the CRS.

Herein, the CRS is a reference signal defined in accordance with the Rel-8/9 LTE scheme, and is a reference signal that is commonly set to all mobile stations UEs in each of the cells.

On the other hand, the CSI-RS is a reference signal defined in accordance with the Rel-10 LTE scheme, and is a reference signal that is individually set to every mobile station UE by using a Radio Resource Control (RRC) message.

The CSI-RS may be used for the quality measurement process in the serving cell, the neighbouring cells (handover destination candidates or target candidates of the CoMP transmission/reception process), or the like, and may be used to measure a CQI in the CoMP transmission point or the serving cell where the CoMP transmission/reception process is performed.

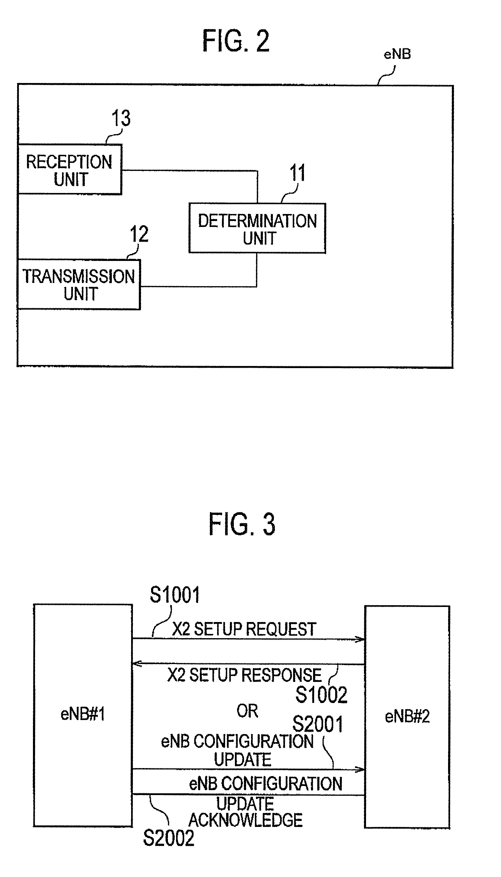

As illustrated in FIG. 2, each of transmission/reception node eNBs 10A to 10D, 20A to 20D, and 30A to 30D according to the present embodiment (hereinafter, representatively described as the transmission/reception node 1) includes a determination unit 11, a transmission unit 12, and a reception unit 13. Herein, for example, the transmission/reception node 1 according to the present embodiment is configured by a radio base station eNB, a remote radio equipment RRE, a relay node RN, or the like.

The determination unit 11 is configured to determine whether a transmission point 1 is installed in the "Coordination Area". For example, the determination unit 11 may be configured to perform such determination by using a positioning unit such as a GPS.

In addition, the determination unit 11 is configured to determine whether the transmission point 1 responds to the CoMP transmission/reception process.

Furthermore, the determination unit 11 is configured to determine whether peripheral transmission/reception nodes are installed in the "Coordination Area" after an "X2 Setup Procedure" is completed between the peripheral transmission/reception nodes.

The transmission unit 12 is configured to transmit various signals to the peripheral transmission/ reception nodes.

The reception unit 13 is configured to receive various signals from the peripheral transmission/reception nodes.

Hereinafter, the operation of the mobile communication system according to the present embodiment will be described with reference to FIGS. 3 to 7. In the example of FIGS. 3 to 7, a radio base station eNB #1 and a radio base station eNB #2 will be described as an example of the transmission/reception nodes.

Firstly, a first operation example of the mobile communication system according to the present embodiment will be described with reference to FIGS. 3 to 5.

As illustrated in FIG. 3, in step S1001, when it is determined that a newly installed radio base station eNB #1 responds to the CoMP transmission/reception process and is installed in the "Coordination Area", the newly installed radio base station eNB #1 transmits "X2 Setup Request" to notify a peripheral radio base station eNB #2 of the PCI of the neighbouring cells of the radio base station eNB #1 and a CSI-RS of the quality measurement process during the CoMP transmission/reception process in association with each other.

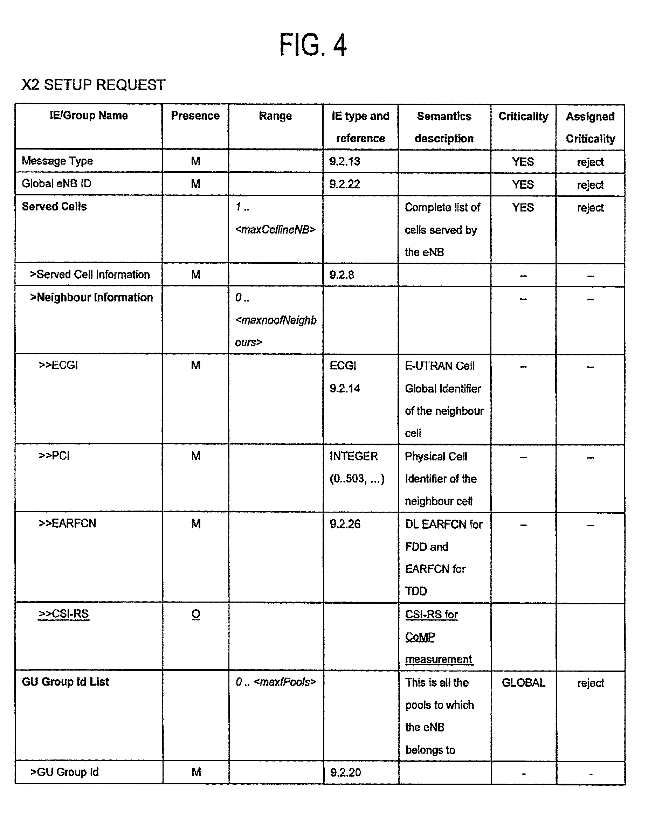

For example, the radio base station eNB #1 gives notification of the PCI of the neighbouring cells of the radio base station eNB #1 according to an information element "PCI" of an information element "Neighbour Information" of an information element "Served Cells" in the "X2 Setup Request" illustrated in FIG. 4, and gives notification of the CSI-RS for the quality measurement process during the CoMP transmission/reception process used in the neighbouring cells according to an information element "CSI-RS" of the information element "Neighbour Information".

In step S1002, the radio base station eNB #2 transmits "X2 Setup Response" to notify the radio base station eNB #1 of the PCI of the neighbouring cells of the radio base station eNB #2 and a CSI-RS for the quality measurement process during the CoMP transmission/reception process in association with each other.

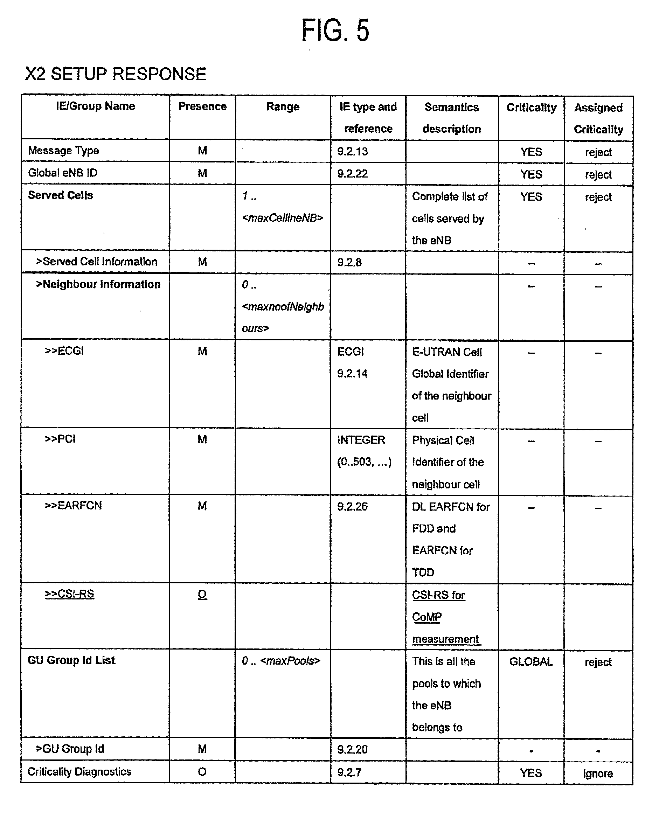

For example, the radio base station eNB #2 gives notification of the PCI of the neighbouring cells of the radio base station eNB #2 according to an information element "PCI" of an information element "Neighbour Information" of an information element "Served Cells" in the "X2 Setup Response" illustrated in FIG. 5, and gives notification of the CSI-RS for the quality measurement process during the CoMP transmission/reception process used in the neighbouring cells according to an information element "CSI-RS" of the information element "Neighbour Information".

Secondly, a second operation example of the mobile communication system according to the present embodiment will be described with reference to FIGS. 3 to 6.

As illustrated in FIG. 3, in step S2001, a radio base station eNB #1 with changed configuration information transmits "eNB Configuration Update" to notify a peripheral radio base station eNB #2 of the PCI of the neighbouring cells of the radio base station eNB #1 and a CSI-RS for the quality measurement process during the CoMP transmission/reception process in association with each other.

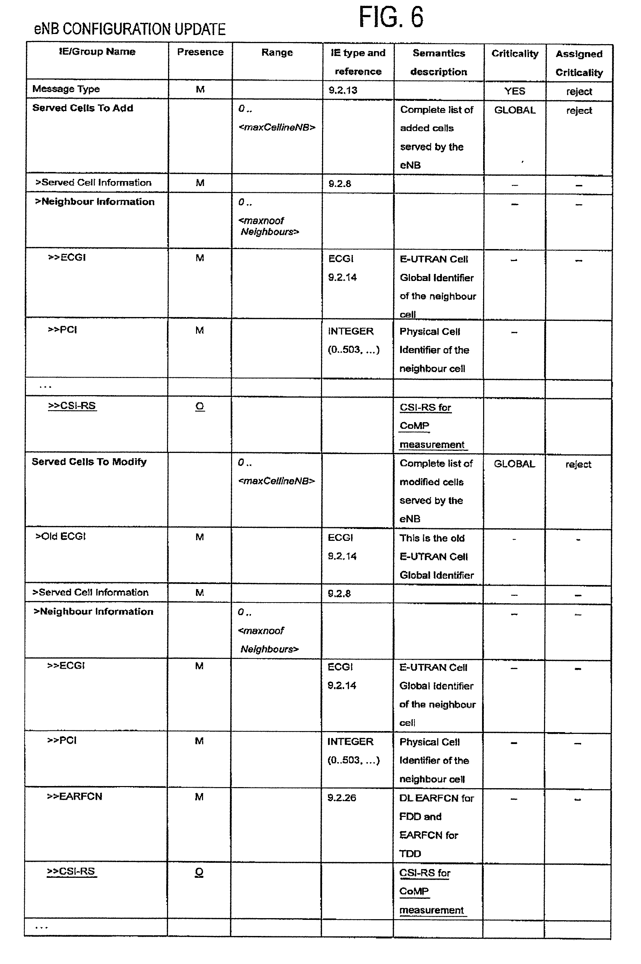

For example, the radio base station eNB #1 gives notification of the PCI of the neighbouring cells of the added radio base station eNB #1 according to an information element "PCI" of an information element "Neighbour Information" of an information element "Served Cells To Add" in the "eNB Configuration Update" illustrated in FIG. 6, and gives notification of the CSI-RS for the quality measurement process during the CoMP transmission/reception process used in the neighbouring cells according to an information element "CSI-RS" of the information element "Neighbour Information".

In addition, the radio base station eNB #1 gives notification of the PCI of the neighbouring cells of the radio base station eNB #1 with the changed configuration information according to an information element "PCI" of an information element "Neighbour Information" of an information element "Served Cells To Modify" in the "eNB Configuration Update" illustrated in FIG. 6, and gives notification of the CSI-RS for the quality measurement process during the CoMP transmission/reception process used in the neighbouring cells according to an information element "CSI-RS" of the information element "Neighbour Information".

In step S2002, the radio base station eNB #2 transmits "eNB Configuration Update Acknowledge" to the radio base station eNB #1.

Herein, the radio base station eNB #2 may give notification of the PCI of the neighbouring cells of the radio base station eNB #2 with the changed configuration information and a CSI-RS for the quality measurement process during the CoMP transmission/reception process in association with each other according to the "eNB Configuration Update Acknowledge".

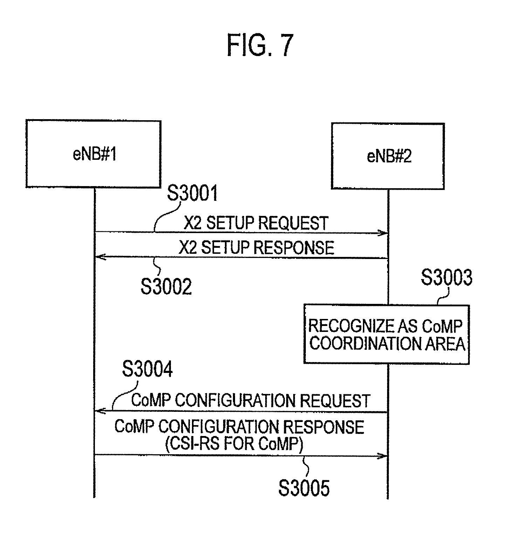

Thirdly, a third operation example of the mobile communication system according to the present embodiment will be described with reference to FIG. 7.

In step S3001, a newly installed radio base station eNB #1 transmits "X2 Setup Request" to a peripheral radio base station eNB #2 in step S1001.

In step S3002, the radio base station eNB #2 transmits "X2 Setup Response" to the radio base station eNB #1.

After "X2 Setup Procedure" is completed between the radio base station eNB #1 and the radio base station eNB #2, when it is determined in step S3003 that the radio base station eNB #1 is set in the "Coordination area", the radio base station eNB #2 transmits "CoMP Configuration Request" to the radio base station eNB #1 in step S3004.

In step S3005, in response to the "CoMP Configuration Request", the radio base station eNB #1 transmits "CoMP Configuration Response" to notify the radio base station eNB #2 of the PCI of the neighbouring cells of the radio base station eNB #1 and the CSI-RS for the quality measurement process during the CoMP transmission/reception process in association with each other.

According to the mobile communication system according to the present embodiment, since the PCI of the neighbouring cells and the CSI-RS for the quality measurement process during the CoMP transmission/reception process may be notified in association with each other between the radio base station eNB #1 and the radio base station eNB #2, it can be appropriately determined whether it is necessary for the radio base station eNB #1 and the radio base station eNB #2 to start the CoMP transmission/reception process based on the result of the quality measurement process during the CoMP transmission/reception process, even in the environment where cells using the same PCI are mixed.

### (First modification)

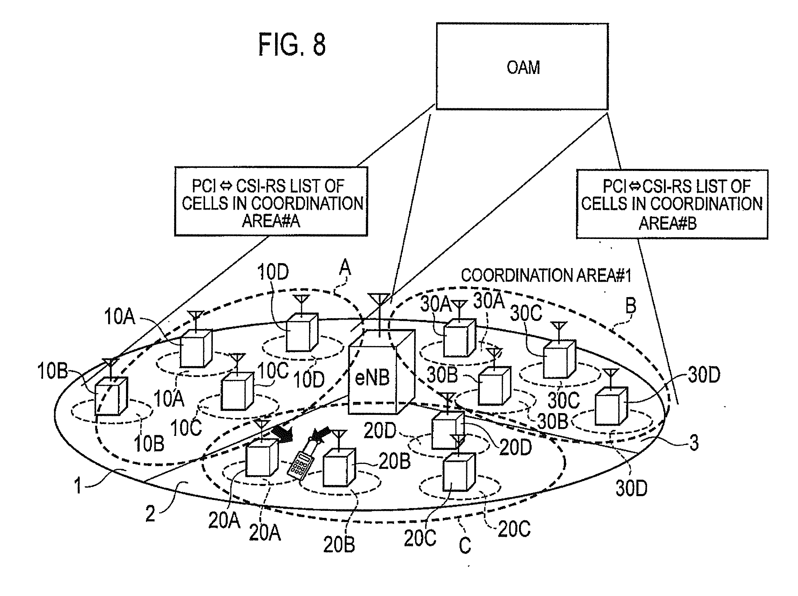

A mobile communication system according to a first modification of the present invention will be described with reference to FIGS. 8 to 10. Hereinafter, the mobile communication system according to the present first modification will be described focusing on differences from the mobile communication system according to the above-described first embodiment.

As illustrated in FIG. 8, in the mobile communication system according to the first modification, an operation and maintenance equipment OAM is provided in addition to the configuration of the mobile communication system illustrated in FIG. 1.

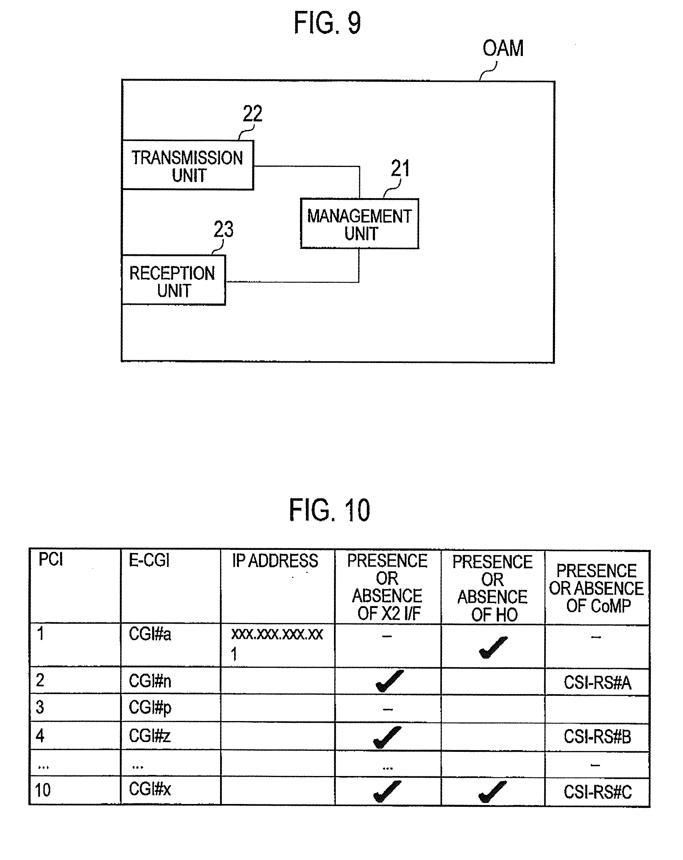

As illustrated in FIG. 9, the operation and maintenance equipment OAM includes a management unit 21, a transmission unit 22, and a reception unit 23.

The management unit 21 is configured to manage the "Coordination area # A" to the "Coordination area # C".

Specifically, the management unit 21 is configured to manage the PCI of the transmission/reception nodes 10A to 10D in the "Coordination area # A" and the CSI-RS for the quality measurement process during the CoMP transmission/reception process in association with each other.

In addition, the management unit 21 is configured to manage the PCI of the transmission/reception nodes 20A to 20D in the "Coordination area # B" and the CSI-RS for the quality measurement process during the CoMP transmission/reception process in association with each other.

In addition, the management unit 21 is configured to manage the PCI of the transmission/reception nodes 30A to 30D in the "Coordination area # C" and the CSI-RS for the quality measurement process during the CoMP transmission/reception process in association with each other.

The transmission unit 22 is configured to notify the transmission/reception nodes 10A to 10D of the "Coordination area # A" of the PCI of the cells 10A to 10D under the transmission/reception nodes 10A to 10D and the CSI-RS for the quality measurement process during the CoMP transmission/reception process in association with each other.

In addition, the transmission unit 22 is configured to notify the transmission/reception nodes 20A to 20D of the "Coordination area # B" of the PCI of cells 20A to 20D under the transmission/reception nodes 20A to 20D and the CSI-RS for the quality measurement process during the CoMP transmission/reception process in association with each other.

Furthermore, the transmission unit 22 is configured to notify the transmission/reception nodes 30A to 30D of the "Coordination area #C" of the PCI of the cells 30A to 30D under the transmission/reception nodes 30A to 30D and the CSI-RS for the quality measurement process during the CoMP transmission/reception process in association with each other.

The reception unit 23 is configured to receive the changed configuration information from the transmission/reception nodes 10A to 10D, 20A to 20D, and 30A to 30D with the changed configuration information.

Furthermore, as illustrated in FIG 10, the transmission/reception nodes 10A to 10D, 20A to 20D, and 30A to 30D are configured to add an item "CoMP (CSI-RS)", which indicates whether the CoMP transmission/reception process is performed, to an existing Neigbour Relation Table (NRT) and manage the CSI-RS for the quality measurement process during the CoMP transmission/reception process in the cell where the CoMP transmission/reception process is performed.

According to the mobile communication system according to the first modification, since the transmission/reception nodes 10A to 10D, 20A to 20D, and 30A to 30D can obtain the CSI-RS for the quality measurement process during the CoMP transmission/reception process in the "Coordination area # A" to the "Coordination area # C", respectively, it can be appropriately determined whether it is necessary for the transmission/reception nodes 10A to 10D, 20A to 20D, and 30A to 30D to start the CoMP transmission/reception process, based on the result of the quality measurement process during the CoMP transmission/reception process, even in the environment where the cells using the same PCI are mixed.

The features of the present embodiment described above may also be expressed as follows.

According to a first feature of the present embodiment, a mobile communication method includes transmitting, by a radio base station eNB #1 (first transmission/reception node), "X2 Setup Request (connection setup request signal) to notify a radio base station eNB #2 (second transmission/reception node) of a Physical Cell Identity (PCI) of neighbouring cells of the radio base station eNB #1 and a Channel State Information-Reference Signal (CSI-RS) for a quality measurement process during a Coordinated Multi-Point (CoMP) transmission/reception process in association with each other in "X2 Setup procedure (connection setup procedure)" between the radio base station eNB #1 and the radio base station eNB #2.

According to a second feature of the present embodiment, a mobile communication method includes transmitting, by a radio base station eNB #2, "X2 Setup Response (connection setup response signal) to notify a radio base station eNB #1 of a PCI of neighbouring cells of the radio base station eNB #2 and CSI-RS for a quality measurement process during a CoMP transmission/reception process in association with each other in "X2 Setup procedure" between the radio base station eNB #1 and the radio base station eNB #2.

According to a third feature of the present embodiment, a mobile communication method includes transmitting, by a radio base station eNB #1, "eNB Configuration Update (configuration information change signal) to notify a radio base station #2 of a PCI of neighbouring cells of the radio base station eNB #1 and a CSI-RS for a quality measurement process during a CoMP transmission/reception process in association with each other in an "eNB Configuration Update procedure (configuration information change procedure)" between the radio base station eNB #1 and the radio base station eNB #2.

According to a fourth feature of the present embodiment, a mobile communication method includes: transmitting, by a radio base station eNB #2, "CoMP Configuration Request (coordinated multi-point transmission/reception process setup information request signal) to a radio base station eNB #1 when it is determined that the radio base station eNB #1 is installed within a "Coordination area (target area of the coordinated multi-point transmission/reception process)" after an "X2 Setup Procedure" between the radio base station eNB #1 and the radio base station eNB #2 is completed; and notifying, by the radio base station eNB #1, the radio base station eNB #2 of a PCI of neighbouring cells under the radio base station eNB #1 and a CSI-RS for a quality measurement process during the CoMP transmission/reception process in association with each other in response to the "CoMP Configuration Request".

According to a fifth feature of the present embodiment, a mobile communication method includes notifying, by an operation and maintenance equipment OAM managing a "Coordination area", the transmission/reception nodes 10A to 10D, 20A to 20D, and 30A to 30D of a PCI of neighbouring cells of transmission/reception nodes 10A to 10D, 20A to 20D, and 30A to 30D in the "Coordination area" and a CSI-RS for a quality measurement process during the CoMP transmission/reception process in association with each other.

The above-described operations of the radio base station eNB, the mobile station UE, the transmission/reception node 1, and the operation and maintenance equipment OAM may be implemented by hardware, may be implemented by a software module executed by a processor, or may be implemented by a combination thereof.

The software module may be provided in any type of storage medium, such as an RAM (Random Access Memory), a flash memory, a ROM (Read Only Memory) , an EPROM (Erasable Programmable ROM), an EEPROM (Electronically Erasable and Programmable ROM), a register, a hard disk, a removable disk, or a CD-ROM.

The storage medium is connected to the processor so that the processor can read and write information from and to the storage medium. Further, such a storage medium may also be integrated into the processor. Furthermore, the storage medium and the processor may be provided in an ASIC. The ASIC may be provided in the radio base station eNB, the mobile station UE, or the transmission/reception node 1, and the operation and maintenance equipment OAM. Further, the storage medium and the processor may be provided in the radio base station eNB or the mobile station UE, the transmission/reception node 1, and the operation and maintenance equipment OAM as discrete components.

As described above, the present invention has been described in detail using the above embodiment; however, it is apparent to those skilled in the art that the present invention is not limited to the embodiment described herein. Modifications and variations of the present invention can be made without departing from the spirit and scope of the present invention defined by the description of the scope of claims. Thus, the description of the present specification is intended for explaining the example only and does not impose any limited meaning to the present invention.

This application is based upon and claims the benefit of priority from Japanese Patent Application No. 2011-243997, filed November 7, 2011, the entire contents of which are incorporated herein by reference.

### Industrial Applicability

As described above, the present invention can provide a mobile communication method capable of appropriately determining whether it is necessary for a radio base station to start a CoMP transmission/reception process, based on the result of a quality measurement process during the CoMP transmission/reception process in a heterogeneous network environment.

### Reference Signs List

OAM operation and maintenance equipment
UE mobile station
1, eNB, 10A to 10D, 20A to 20D, 30A to 30D transmission/reception node
11 determination unit
12, 22 transmission unit
13, 23 reception unit
21 management unit

## Claims

1. A mobile communication method comprising
transmitting, by a first transmission/reception node, a connection setup request signal to notify a second transmission/reception node of a physical cell identity of neighbouring cells of the first transmission/reception node and a channel state information-reference signal for a quality measurement process during a coordinated multi-point transmission/reception process in association with each other in a procedure of setting a connection between the first transmission/reception node and the second transmission/reception node.

2. A mobile communication method comprising
transmitting, by a second transmission/reception node, a connection setup response signal to notify a first transmission/reception node of a physical cell identity of neighbouring cells of the second transmission/reception node and a channel state information-reference signal for a quality measurement process during a coordinated multi-point transmission/reception process in association with each other in a procedure of setting a connection between the first transmission/reception node and the second transmission/reception node.

3. A mobile communication method comprising
transmitting, by a first transmission/reception node, a configuration information change signal to notify a second transmission/reception node of a physical cell identity of neighbouring cells of the first transmission/reception node and a channel state information-reference signal for a quality measurement process during a coordinated multi-point transmission/reception process in association with each other in a procedure of changing configuration information between the first transmission/reception node and the second transmission/reception node.

4. A mobile communication method comprising:
transmitting, by a second transmission/reception node, a coordinated multi-point transmission/reception process setup information request signal to a first transmission/reception node when it is determined that the first transmission/reception node is installed within a target area of the coordinated multi-point transmission/reception process after a procedure of setting a connection between the first transmission/reception node and the second transmission/reception node is completed; and
notifying, by the first transmission/reception node, the second transmission/reception node of a physical cell identify of neighbouring cells of the first transmission/reception node and a channel state information-reference signal for a quality measurement process during the coordinated multi-point transmission/reception process in association with each other in response to the coordinated multi-point transmission/reception process setup information request signal.

5. A mobile communication method comprising
notifying, by an operation and maintenance equipment managing a target area of a coordinated multi-point transmission/reception process, a transmission/reception node of the target area of a physical cell identify of cells under the transmission/reception node and a channel state information-reference signal for a quality measurement process during the coordinated multi-point transmission/reception process in association with each other.
